# EUROPEAN PATENT APPLICATION

(11) **EP 1 950 925 A1**
(43) Date of publication of application: **30.07.2008**
(21) Application number: 06292054.1
(22) Date of filing: 22.12.2006
(51) Int. Cl.: H04L 29/06

(54) **Method for provisioning a web service session, related client device and IMS gateway**

(71) Applicant: Alcatel Lucent, 75008 Paris (FR)
(72) Inventor: Maas, Gerard, 2650 Edegem (BE); Van Vlerken, Bert, 2930 Brasschaat (BE)
(74) Representative: Plas, Axel Ivo Michel

(57) **Abstract**

A method for provisioning a web service session between a client device (101) and a web service (102). The client device (101) sends a session request (121) to an IMS network (110), which locates the web service (102) and delivers the request to the web service (102). The web service (102) sends a reply to client (101) using the IMS network (110). Once a web service session is established, the client device (101) can use the web service (102).

## Description

### Field of the Invention

The present invention generally relates to web services and more in particular to the provisioning of web service sessions. Web services usually provide small interface and processing elements which can be combined to form powerful web applications such as online auctions or information databases. Provisioning a web service session in the context of the present invention means establishing an initial connection to the web service and creating a web service session between the client device and the web service which allows the client device to use the web service.

### Background of the Invention

In the prior art, well-known protocols are used to consult or provision web services, for instance the HyperText Transfer Protocol (HTTP) as defined in RFC 2616 and the Simple Object Access Protocol (SOAP). Because all web browsers are capable of communicating by HTTP, web services are easily accessible by the general public this way.

The delivery of services also imposes various problems to the service operators. Firstly, some form of authentication may be required to limit abuse and protect sensitive personal information. Secondly, generating revenue from the services requires some form of usage tracking which can be used for billing the users of these services.

Web services with authentication and billing functionality are known. Numerous methods already exist in traditional websites. For instance, it is possible to build a database and store a username and password for every user, cookies can be used to track where users go, web server specific implementations can restrict access to sections of websites, etc.

The problems arise when an operator offers multiple services. Multi-service deployment requires each web service to offer its own authentication and billing platform, or requires complicated sharing of billing and authentication information between the various web services, increasing the complexity of each service and delaying the creation and deployment of new services. This problem is further magnified as the operator allows 3^{rd} party services to operate in its network. The 3^{rd} party services would need access to the information stored by the operator. This could either require the operator to put the 3^{rd} party services in their network or sharing possibly sensitive information over a communication network such as the internet.

A user needs to know where a web service is located in order to use the service. On the Internet, a user may be able to access a web service directly, but typically a user will interact with a front-end application. The front-end application can provide a user interface and can use various web service components to offer particular functionality. Generally web services are also able to communicate with each other using the interface defined for a particular web service. Communication between web services is often hidden for the end-user because all the results are delivered by the front-end application.

An example of the use of web services by a front-end application and other web services can be found in an online bookstore. The bookstore offers a front-end application which is a regular website that can interact with several web services. One of these web services is offered by the bookstore and keeps the order list of users. When a user orders a book, the front-end application will interact with this web service to store any information required to process the order. In addition, a publisher can offer a web service which allows the front-end application to search for a particular book or information about that book. These are two examples of the front-end application using a web service, but a web service interacting with another web service is possible as well. A supplier can offer a web service which is able to provide stock information to another web service, in this case the web service of the bookstore that tracks orders. This way, the front-end application can supply a user with information on the book and its availability.

Web services and the front-end application need to know where a particular service is located in order to use that service. Therefore the physical location of a web service such as its IP address and port number have to be known by the web services and the front-end application. This reduces the flexibility for the operators providing particular services. For instance, if information like the IP address or port number change, all applications using that service need to be aware of such a change.

In the mobile world it is inconvenient to enter long URLs using a limited or no keyboard. This makes the use of front-end applications less convenient. In addition, mobile services may need to interact with services located in networks of different mobile operators. These networks often use private address ranges for security purposes. These addresses are therefore unusable to communicate with a particular service from outside the network.

It is an object of the present invention to disclose web services in a flexible and transparent way to the user without the necessity of knowledge about the web service location in advance. It is another objective of the present invention to provide easy authorization and tracking for web services. It is another object of the present invention to broaden the use of web services to mobile users.

### Summary of the Invention

According to the invention, the above defined objectives are realized through a method for the provisioning of a web service session as defined in claim 1, comprising the steps of:
- initiating a request for a web service by a client;
- locating the web service;
- receiving the request by the web service; and
- sending a response to the client by the web service
characterized in that initiating the request involves sending a request to an IP Multimedia Subsystem (IMS) network and that locating the web service is done by the IMS network.

Web services are generally stateless, which implies that all information regarding usage tracking, identity and payment need to be sorted out on a per-call basis. Sessions are required to identify a user and keep track of the user's activities. A session consists of three parts, firstly the creation of a session, secondly the actual use of the web service and thirdly the termination of the service. Provisioning a web service session is performing the necessary steps in creating a web session and offering a way of terminating the session when desired. In addition, the provisioning may include the creation of a dedicated communication channel between the client and the web service.

The request for a web service is a message transmitted by the client indicating that the client would like to use a particular service. According to the invention, this request is sent to an IMS network, e.g. an IMS gateway in such network, instead of directly to the web service. Generally, an IMS network has a central registry which specifies the location of a service within the IMS network. The IMS network is able to locate the service based on the request message and the information from the registry, and is thus able to route the request to the web service. The web service will take all required steps to provide its part of the session establishment and reply to the client with the essential parameters used by the client to fulfil its part of the session establishment. At that point, both client and web service have all the mandatory information and the session is established, thus, the client can commence using the web service.

The essential parameters provided to the client by the web service are typically presented in an URL. These parameters can include a domain name or IP address of the server on which the service resides and a port number used to communicate with a particular web service at that address. Locating a web service in the context of the present invention means that a device is able to retrieve the characteristic parameters for a particular service from a source and inform the client about these parameters.

An IP Multimedia Subsystem (IMS) platform such as defined by the 3^{rd} Generation Partnership Project (3GPP) offers a flexible service delivery platform. It is able to transport all kinds of traffic using a large range of protocols, for instance the Session Initiation Protocol (SIP) and the HyperText Transfer Protocol (HTTP). In addition, both mobile and fixed clients can access an IMS platform using different technologies such as Ethernet connections, Global Packet Radio Service (GPRS) connections or Universal Mobile Telecommunications System (UMTS) connections. Further, the IMS platform provides a centralized database which specifies the rights and available services for all users known to the IMS network.

The IMS platform has authentication and authorization mechanisms which are automatically triggered by all users who attempt to access the IMS network. The platform also provides the necessary means for tracking the usage of the platform by a particular user for billing. In addition, an IMS platform allows for the location of a service in the IMS network by simply referring to a specific service identifier, rather than a physical location such as an IP address or URL.

However, IMS is less flexible in adding new services. So far, the use of IMS networks has been restricted to presence and location services or communication services such as Instant Messaging or Push To Talk. Such presence services allow a user to discover if another user is connected to the system and if that user is willing to receive particular messages or interact in particular ways. For instance, a presence service can notify changes to a user's status or availability of a user for a voice session. Location services on the other hand, can be used to discover the physical location of a particular person and deliver such information to other users or applications.

A service has to be registered to the IMS network in order to be recognized. Any service that is not registered cannot be referred to in a request from a client to the network or service and is thus undeliverable. The present invention provides a new use of existing IMS platforms by integrating web service technology into IMS platforms. However, a registration of the web service in the IMS network is required for the network to recognize said web service.

An additional optional feature of the method according to the present invention is that it may further comprise the step of establishing a communication channel between the web service and the client by said IMS network. This option is defined in claim 2.

Indeed, web services are generally interactive, which means that a lot of messages are transmitted between each client and the web services. One way of delivering these messages to the web service, is by sending the messages to the IMS network. The IMS network in turn can then route and deliver the messages to the respective web services. However, this can increase the load on the IMS network significantly due to the large amount of messages. Alternatively, the IMS network can establish a direct connection between a client and a web service. Such a direct connection can for instance be an IP tunnel, which bypasses the IMS nodes and allows for communication between the client and the web service using protocols such as HTTP.

Another optional feature of the present invention is that the method may further comprise the step of terminating the session by transmitting a termination message to the web service through the IMS network. This option is defined in claim 3.

Sessions should not be kept alive indefinitely because storing the related information, such as the address of a client, username, usage tracking information, etc, would consume large amount of storage space. In addition, the related information can change over time, for instance the client receives a new IP address, and would thus populate the storage with invalid information. Therefore, some form of session termination should be provided to users of web services. A first form of session termination is providing a way for a session to expire after a predetermined amount of time, e.g. if the service did not receive a message from a client in 2 minutes, the session is considered closed and the service can remove any information about that session from the storage. A similar system could work for a client where, in case no answers are received from the service, it can consider the session closed and remove any local information. This system could work but has a major disadvantage. If a user is reading information that was retrieved from the web service, and needs more time than the expiry time, the session would be terminated and the user could not continue without starting all over. Alternatively, a second session termination system can be used where a user explicitly informs the web service that use of the service is terminated. This way a session should not be terminated in the middle of the session and allow for users to read information at their own pace. This system could however be combined with an expiry time for cases where the connection fails and either web service or client are unable to send or receive a termination request.

There are several possible ways of delivering these termination messages to the web service. For instance, the client could send a termination request to the web service using a dedicated communication channel between them. Terminating a session this way is possible but fails to inform the IMS network about the end of the session. As a result, the billing information in the IMS network could be wrong and therefore another option wherein the termination request is sent to the IMS network is preferable. The IMS network is able to detect these messages and determine which session is about to end so the IMS network can close all related channels and remove session information.

Another optional feature of the method according to the present invention is that the request may correspond to a Session Initiation Protocol (SIP) Invite request, as defined in claim 4.

The IMS network supports various SIP requests such as a SIP Message request. The IMS network is able to interpret headers in these requests and route them to their destination. A SIP request can transport a payload in addition to the header. A web service session could be established by adding a proprietary protocol to the SIP request payload or use a protocol such as the Session Description Protocol (SDP). This would however require additional steps to inform the IMS network about the creation of a new session. Therefore a SIP Invite request can be used as this is the standard SIP request for session initiation. An IMS network is capable of delivering a SIP Invite request to the appropriate nodes or services and start gathering information such as the information required for billing. The only requirement in order to use a SIP Invite request is that the web service has to be recognized as a valid value for the service header field in a SIP Request message.

A further optional feature of the method according to the present invention is that the response may correspond to a Session Initiation Protocol (SIP) OK message, as defined in claim 5.

Generally any SIP request transmitted in an IMS network is replied to with a response message. The 200 OK message is a response indicating that the request was received and processed successfully. A web service would receive an Invite request and respond with a 200 OK message to indicate a receipt. The IMS network would consider this response message as an indication of session establishment and assume that client and service can communicate. This is true for an IMS session, but not necessarily for a web service session. Therefore, a SIP request from the web service to the client is required informing the client of web service parameters such as IP address and port.

A more straightforward way could be to include the web service parameters in the SIP Response message sent from the service to the client in response to the Invite request. A response message can carry a payload, such as a propriety protocol or SDP which can be used to contain the web service parameters. By using the response message to the Invite request, the number of messages between client and web services is limited which can decrease the overall load on the IMS network and reduces the delay between the first request and the actual session being established and ready for use.

The present invention further relates to a client device able to use a web service as defined in claim 6, comprising:
- means for formulating and sending a web service session request;
- means for receiving a response to the request; and
- means for communicating with the web service;
characterized in that the client device is adapted to send the request to an IP Multimedia Subsystem (IMS) network and to receive a response from said IMS network.

The client device can be any device able to communicate with an IMS network. The device can be a personal computer, a handheld device such as a Personal Digital Assistant (PDA), a mobile phone, a digital sensor or any other user driven or autonomous machine. Some sort of connection capable of transporting data, such as an Ethernet connection from a personal computer, a WiFi connection from the PDA or a Global Packet Radio System (GRPS) connection from the mobile phone, is required. In addition, the device has to be capable of generating SIP requests and responses as SIP is used in IMS networks for communication between nodes.

Once the request is generated and delivered to the IMS network, it will be routed to the web service by the IMS network. The web service will receive the request, process the request and send a response to the client. Upon receipt of the response, the client should be able to determine how to communicate with the service. For instance through the IMS network or a dedicated communication channel between the service and the client.

Finally, the client can communicate with the web service using particular protocols such as HTTP. These protocols are used to send and receive information to and from the web service and are basically part of using the web service.

The device has to be capable of generating a SIP request and adding the required information to this request. For instance, the service field of the SIP header has to contain the desired web service. Other fields in the header are used for client authentication and authorization to use a particular service and yet other fields can identify a user for billing purposes.

The present invention further also relates to an IP Multimedia Subsystem (IMS) network gateway, as defined in claim 7, comprising:
- means for receiving a message from a client device;
- means for sending a message to the client device;
- means for receiving messages from the IMS network;
- means for sending messages to the IMS network; and
- means for locating a service in the IMS network;
characterized in that the gateway is configured to locate a web service in the IMS network and to deliver messages to or from the web service.

An IMS gateway is a node placed between the IMS network and the external network. One example is the Proxy-Call Session Control Function (P-CSCF) which is used as the main gateway between all access technologies and the IMS network core nodes such as other Call Session Control Functions, Home Subscriber Server (HSS) and hosted application servers offering services such as location and presence. The P-CSCF receives messages from all the client devices that wish to use the IMS network, forwards these messages onto the IMS network and is involved in authentication of the client device. The P-CSCF will also respond to any message received from a particular user or deliver messages for a client device originating in the IMS network.

The IMS network has an important role in routing messages to their destination. Because a client device is unaware of the exact location of a particular service, the gateway has to be able to discover this location. The IMS network typically hosts a registry which specifies the location of each service in the IMS network. A gateway should therefore be able to question the registry and send the requests to the appropriate service. New services such as web services have to be registered in the registry of the IMS network. Because the gateway is able to question this registry, it is also able to locate the web service within the IMS network.

An optional feature of the IP Multimedia Subsystem (IMS) network gateway according to the present invention is that this gateway may further comprise means able to establish a connection between a client device and a web service. This option is defined by claim 8.

The gateway could be able to interpret the communication between the client device and the web service during the creation of a session and termination of a session. Processing the header part of a SIP request or response is a standard ability of an IMS gateway as it is important for routing, authentication and authorization. However, information about the web service can be transported in the payload of the SIP requests and responses. The gateway should therefore be able to retrieve information from the payload to create a dedicated communication channel between the client device and the web service.

The dedicated communication channel could be an IP tunnel in which HTTP or any other protocol can be used. This allows the client device to retrieve information from the web service and deliver information to the web service without using the IMS network infrastructure.

### Brief Description of the Drawings

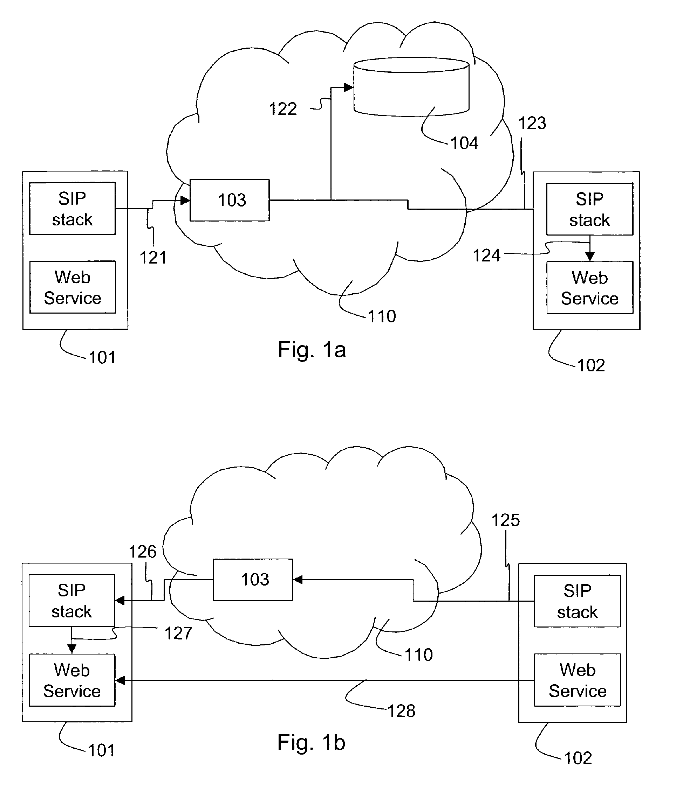

Fig. 1a illustrates a client device, a web service and related message flow during a web service session request according to an embodiment of the present invention;
Fig. 1b illustrates a client device, a web service and related message flow during web service session establishment according to an embodiment of the present invention; and

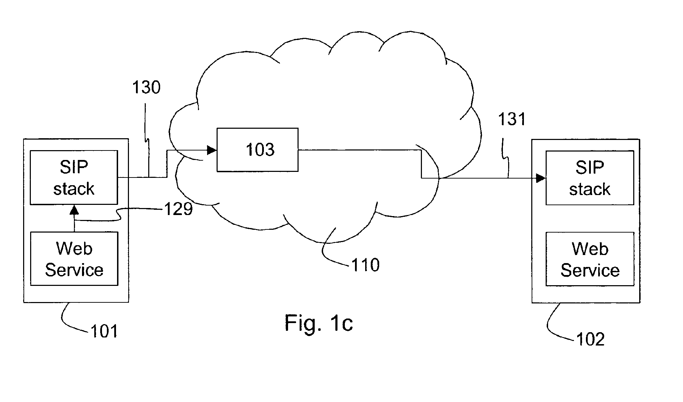

Fig. 1c illustrates a client device, a web service and related message flow during web service session termination according to an embodiment of the present invention.

### Detailed Description of Embodiment(s)

Fig. 1a illustrates a client device 101 comprising a SIP stack for communication with the IMS network 110 of which only Proxy-Call Session Control Function (P-CSCF) 103 is shown and a web stack for communication with the web service 102. Reference 110 represents the entire IMS network of which only P-CSCF 103 and registry 104 are shown explicitly in the figures. All other nodes that may be involved in the process are no importance to the operation of the present invention. For instance, nodes handling billing or authentication operate as normal and provide no new functionality to the present invention. They are therefore not drawn or described in the following descriptions.

In a first step 121, the client 101 sends a SIP Invite request to the IMS network 110 and more in particular to the P-CSCF 103. This SIP Invite request specifies information such as identification of the user, authentication information and the requested service. In step 122 the P-CSCF 103 resolves the destination address, which is the requested service, using registry 104. Resolving the destination allows the P-CSCF 103 to select the next node in the IMS network 110 to deliver the Invite request 121 to web service 102. The communication between the P-CSCF 103 and the registry 104 can either be direct or through intermediary nodes in the IMS network 110. Once P-CSCF 103 has located the web service 102, it forwards the Invite request 121 to the web service 102. This is indicated by 123. In web service 102, the SIP Invite request 121 is received by the SIP stack. Finally, the SIP Stack of web service 102 delivers the request to the web stack of service 102 in step 124.

The next phase of the session provisioning will result in establishing a SIP session and a web service session as illustrated by Fig. 1b. The SIP session is used for authorization, i.e. determining if a user is allowed to use a particular service, routing of messages to particular nodes and gathering billing information. The web service 102 will provide the SIP stack with the information required by the client device 101 to use the web service 102. In particular the URL specifying the web service endpoint, generally made up out of an IP address or hostname and a port number, are provided. The SIP stack of the web service 102 will respond to the SIP Invite request with a SIP Response message, for instance a 200 OK. This Response message is sent to the client device 101 in step 125 and goes through P-CSCF 103. In step 126, P-CSCF 103 informs the SIP stack of the client device 101 about the web service endpoint for web service 102. The SIP stack of the client device 101 will in turn deliver this information to the web service stack of the client device 101 which is then able to set up a connection 128. The P-CSCF 103 may create a dedicated communication channel 128 between the web service endpoint from the web service 102 and the client device 101 by requesting the required resources from the underlying access technology.

Fig. 1c illustrates the termination of the web service session when the client device 101 no longer desires to use the web service 102. The web stack of the client device 101 informs the SIP stack in step 129 that the session can be terminated and transmits a SIP Bye request in step 130. This SIP Bye request is received by the P-CSCF 103, which in turn will inform the nodes in the IMS network 110 to end the related SIP session. In addition, the SIP Bye request is transmitted to the web service 102 by the P-CSCF 103 in step 131. The web service 102 can terminate the web session, for instance removing any temporary stored information about the user and respond with a SIP response message. When this response message is received by the client device 101, the IMS nodes terminate the IMS session.
Although Fig. 1B illustrates the setup of a dedicated channel communication, it should be noted that this is an optional step in web service session establishment. A dedicated channel has advantages but can easily be replaced by using the IMS network as communication channel between a client device and the web service. In addition, the IMS network may not be involved in the creation of the dedicated channel.

It should be noted that session termination as illustrated in Fig. 1c is optional. As mentioned earlier, explicit termination of a session could be replaced by waiting for sessions to expire after a predetermined amount of time. Another way of terminating a session is by using a direct communication channel between client and web service or using different messages than SIP messages for session termination.

It should also be noted that the use of SIP messages is optional. IMS networks use SIP requests and responses for routing and transmitting information between nodes. It is however possible to create a new protocol which is transported in the SIP requests and responses, or use a protocol such as SDP to that purpose. The requests and responses could be of a different type than those used by IMS for session creation and termination. However, the use of generally used SIP requests and responses is encouraged for optimal support and functionality of the IMS network.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third" and the like, when used in the description or in the claims are introduced to distinguish between similar elements or steps and are not necessarily describing a sequential or chronological order.

## Claims

1. A method for the provisioning of a web service session comprising the steps of:
- initiating a request (121) for a web service (102) by a client (101);
- locating said web service (102);
- receiving said request (121) by said web service (102); and
- sending a response (125) to said client (101) by said web service (102);
**characterized in that** initiating said request (121) involves sending a request to an IP Multimedia Subsystem (IMS) network (110) and that locating said web service is done by said IMS network (110).

2. A method for providing a web service session according to claim 1, **characterized in that** said method further comprises the step of establishing a communication channel (128) between said web service (102) and said client (101) by said IMS network (110).

3. A method for providing a web service session according to claim 1, **characterized in that** said method further comprises the steps of terminating said session by transmitting a termination message (130) to said web service (102) through said IMS network (110).

4. A method for providing a web service session according to claim 1, **characterized in that** said request (121) corresponds to a Session Initiation Protocol (SIP) Invite request.

5. A method for providing a web service session according to claim 1, **characterized in that** said response (125) corresponds to a Session Initiation Protocol (SIP) OK message.

6. A client device (101) able to use a web service (102) and thereto comprising:
- means for formulating and sending a web service session request;
- means for receiving a response to said request; and
- means for communicating with said web service (102);
**characterized in that** said client device (101) is adapted to send said request to an IP Multimedia Subsystem (IMS) network (110) and to receive said response from said IMS network (110).

7. An IP Multimedia Subsystem (IMS) network gateway (103) comprising:
- means for receiving a message from a client device (101);
- means for sending a message to said client device (101);
- means for receiving a message from an IP Multimedia Subsystem (IMS) network (110);
- means for sending messages to said IMS network (110); and
- means for locating a service in said IMS network (110);
**characterized in that** said gateway (103) is configured to also locate a web service (102) in said IMS network (110) and to deliver messages to or from said web service (102).

8. An IP Multimedia Subsystem (IMS) network gateway (103) according to claim 7, **characterized in that** said gateway (103) further comprises means able to establish a connection (128) between said client device (101) and said web service (102).
